# EUROPÄISCHE PATENTSCHRIFT

(11) **EP 2 805 078 B1**
(45) Veröffentlichungstag und Bekanntmachung des Hinweises auf die Patenterteilung: **26.10.2016**
(21) Anmeldenummer: 12810069.0
(22) Anmeldetag: 29.11.2012
(51) Int. Cl.: F16D 1/08

(54) **WELLE-NABE-VERBINDUNG, ADAPTER UND GETRIEBEMOTOR**
SHAFT-HUB COUPLING, ADAPTER AND DRIVE MOTOR
ACCOUPLEMENT D'ARBRE ET MOYEU, ADAPTATEUR ET MOTEUR D'ENTRAINEMENT

(30) Priorität: 16.01.2012 DE 102012000537
(43) Veröffentlichungstag der Anmeldung: 26.11.2014
(73) Patentinhaber: SEW-EURODRIVE GmbH & Co. KG, 76646 Bruchsal (DE)
(72) Erfinder: KASPER, Jürgen, 67360 Lingenfeld (DE)
(86) Internationale Anmeldenummer: PCT/EP2012/004923
(87) Internationale Veröffentlichungsnummer: WO 2013/107476

(56) Entgegenhaltungen:
- DE-C- 137 669
- GB-A- 776 357
- GB-A- 798 658
- GB-A- 2 079 695
- GB-A- 2 273 143
- US-A- 3 598 432

## Beschreibung

Die Erfindung betrifft eine Welle-Nabe-Verbindung, einen Adapter und einen Getriebemotor.

Es sind Adapter für Getriebemotoren bekannt, die eine Kupplung umfassen, mit welcher eine Motorwelle eintriebsseitig und eine eintreibende Welle eines Getriebes abtriebsseitig verbindbar sind.

Aus der GB 798 658 A ist eine Verbindung für eine zentrisch montiertes Maschinenelement auf einer drehbar gelagerten Welle bekannt.

Aus der GB 2 079 695 A ist ein axial justierbares Steuerrad bekannt.

Aus der GB 2 273 143 A ist eine Verschließvorrichtung bekannt.

Aus der DE 137 669 C ist eine Befestigungsvorrichtung für Holzriemscheiben bekannt.

Aus der GB 776 357 A ist ein Mittel für Verbindung von Teilen eines Steuergetriebes bekannt.

Aus der US 3 598 432 A ist als nächstliegender Stand der Technik eine Welle-Nabe-Verbindung bekannt.

Der Erfindung liegt daher die Aufgabe zugrunde, eine Klemm-Verbindung in einfach herstellbarer Weise weiterzubilden.

Erfindungsgemäß wird die Aufgabe bei der Welle-Nabe-Verbindung nach den in Anspruch 1, bei dem Adapter nach den in Anspruch 14 und bei dem Getriebemotor nach den in Anspruch 15 angegebenen Merkmalen gelöst.

Wichtige Merkmale der Erfindung bei der Welle-Nabe-Verbindung sind, dass bei der Welle-Nabe-Verbindung eine Welle, insbesondere Motorwelle, in einen Aufnahmebereich einer Nabe, insbesondere Adapterwelle, eingeführt und kraftschlüssig verbunden ist, insbesondere klemmverbunden ist,
wobei die Nabe zumindest in einem axialen Bereich drei, in Umfangsrichtung regelmäßig voneinander beabstandete Abflachungen aufweist,
wobei ein erstes Schraubteil, insbesondere ein erster vorzugsweise radial wirkender Gewindestift, in einen Klemmring eingeschraubt ist und auf einen Bereich der Nabe drückt zur Bewirkung der kraftschlüssigen Verbindung, insbesondere mittels Verspannen des Klemmrings gegen die Nabe, wobei der Bereich in Umfangsrichtung mittig zwischen zwei der Abflachungen angeordnet ist, insbesondere wobei der Bereich einen Umfangswinkelbereich überdeckt, weicher kleiner ist als der Winkelabstand in Umfangsrichtung zwischen zwei in Umfangsrichtung nächst benachbarten Abflachungen.

Von Vorteil ist dabei, dass ein einfache und schnell betätigbare Verbindung erreicht ist. Außerdem ist ein zentrisch spannendes Klemmsystem in einfacher Weise herstellbar. Die zentrische Klemmung der Welle in der Nabe wird durch die symmetrische Anordnung der Abflachungen erreichbar.

Vorteiligerweise ist die Welle-Nabe-Vorrichtung über die Welle lagerbar. Diese Welle ist beispielsweise in einem Motorgehäuse lagerbar über zwei Lager. Hierbei ist das von der Welle-Nabe-Verbindung abgewandte Lager als axiales Festlager ausführbar und das zur Welle-Nabe-Verbindung näher zugewandte Lager als axiales Loslager. Somit ist auf dem von der Welle-Nabe-Verbindung abgewandten Ende der Welle ein Winkelsensoren oder dergleichen anordenbar. Thermisch bedingte Längenveränderungen verschieben somit das andere axiale Ende der Welle und somit auch die Welle-Nabe-Verbindung. Da diese aber über die Lagerung der Welle gelagert ist, besteht keine Beeinträchtigung durch thermisch bedingte Längenveränderungen der Welle. Insbesondere bei Ausführung der Nabe mit Sonnenverzahnung oder bei Verbindung der Nabe mit einer Sonnenradwelle verschiebt sich die Sonnenradverzahnung thermisch bedingt nur axial, wobei die Planetenradverzahnung und Sonnenradverzahnung mit zumindest teilweise axial sich erstreckenden Verzahnungen versehen sind.

Weiter ist von Vorteil, dass geschlitzte Buchsen und dergleichen verzichtbar sind. Die Erfindung kommt also mit äußerst kostengünstigen Bauteilen aus.

Bei einer vorteilhaften Ausgestaltung sind die Abflachungen auf der von der Welle abgewandten Außenseite der Nabe angeordnet. Von Vorteil ist dabei, dass eine einfache Herstellung der Nabe ausführbar ist. Außerdem sind somit die Bereiche dickerer Wandstärke gleichmäßig am Umfang verteilt.

Bei einer vorteilhaften Ausgestaltung ist der Klemmring mit der Nabe drehfest verbunden, insbesondere wobei die Abflachungen zwischen dem Klemmring und der Nabe angeordnet sind. Von Vorteil ist dabei, dass beim Einführen der Welle, also zeitlich vor dem Klemmverbinden, die Welle zentrisch in die Nabe einführbar ist und beim Klemmverbinden dann durch die drei Bereiche dickerer Wandstärke die Welle zentrisch fixierbar ist.

Der Bereich ist in Umfangsrichtung mittig zwischen zwei der Abflachungen angeordnet, insbesondere liegt der Bereich vom von den Abflachungen axial überdeckten Bereich.

Von Vorteil ist dabei, dass dort eine höhere Wandstärke realisierbar ist und außerdem eine zentrische Aufnahme der Welle in der Nabe erreichbar ist.

Bei einer vorteilhaften Ausgestaltung weist die Nabe in diesem Bereich eine höhere Wandstärke auf als im Bereich einer jeweiligen Abflachung. Von Vorteil ist dabei, dass große Druckkräfte in diesen Bereich einbringbar sind, da die Wandstärke ausreichend ist. In den infolge der Abflachungen mit dünner Wandstärke ausgeführten Bereichen wären diese eingebrachten Druckkräfte zerstörend, da die Wandstärke dort hierfür nicht ausreichen würde.

Bei einer vorteilhaften Ausgestaltung ist als Verdrehsicherungsmittel ein weiteres Schraubteil, insbesondere Gewindestift oder Madenschraube, oder eine mit zumindest einer der Abflachungen der Nabe korrespondierenden Abflachung oder einen mit zumindest einer der Abflachungen der Nabe korrespondierenden ebenen Innenwandungsabschnitt vorgesehen am Klemmring,
insbesondere wobei das Verdrehsicherungsmittel die Verdrehung zwischen Klemmring und Nabe sichert,
insbesondere wobei das Verdrehsicherungsmittel diametral gegenüber von dem ersten Schraubteil angeordnet ist, insbesondere also der Schwerpunkt des ersten und weiteren Schraubteils voneinander in Umfangsrichtung 180° entfernt sind,
insbesondere wobei das weitere Schraubteil klebeverbunden ist mit dem Klemmring. Von Vorteil ist dabei, dass das weitere Schraubteil eine Abflachung der Innenwandung des Klemmrings erzeugbar macht, ohne dass der Klemmring unrund bearbeitet werden muss. Somit ist eine einfache Herstellung des Klemmrings ermöglicht und nur eine Rundbearbeitung notwendig - zumindest an der Innenwandung des Klemmrings.

Bei einer vorteilhaften Ausgestaltung weist als Verdrehsicherungsmittel der Klemmring an seiner der Nabe zugewandten Innenwandung eine Abflachung auf,
insbesondere wobei die an der Innenwandung des Klemmrings angeordnete Abflachung, welche eine der Abflachungen der Nabe berührt, insbesondere denselben Umfangswinkel überdeckt wie die Abflachung der Nabe. Von Vorteil ist dabei, dass kein zusätzliches Mittel notwendig ist sondern der Klemmring eine Innenkontur hat, die eine mit einer der Abflachungen zusammenwirkende Verdrehsicherung aufweist.

Bei einer vorteilhaften Ausgestaltung ist die Nabe radial zwischen Welle und Klemmring angeordnet. Von Vorteil ist dabei, dass die Nabe mit elastisch verformbaren Bereichen ausgebildet ist.

Bei einer vorteilhaften Ausgestaltung ist der Aufnahmebereich zur Betätigung des ersten Schraubteils unterschiedlich ausgeführt vom Aufnahmebereich zur Betätigung des Verdrehsicherungsmittels,
so dass zur Betätigung des ersten Schraubteils ein anderes Werkzeug notwendig ist als zur Betätigung des Verdrehsicherungsmittels,
insbesondere wobei das erste Schraubteil als erster Gewindestift und das Verdrehsicherungsmittel als weiterer Gewindestift ausgeführt ist. Von Vorteil ist dabei, dass keine Fehlbetätigung ausführbar ist. Zusätzlich ist das weitere Schraubteil klebeverbunden, so dass eine zusätzlich auch hierdurch verhindert ist.

Bei einer vorteilhaften Ausgestaltung ist auf der Nabe ein Sicherungsring zur axialen Sicherung des Klemmrings angeordnet. Von Vorteil ist dabei, dass zur Transportsicherung der Klemmring auf der Welle axial festgelegt ist.

Bei einer vorteilhaften Ausgestaltung ist das erste Schraubteil als in Umfangsrichtung wirkende, insbesondere begrenzend wirkende Transportsicherung oder Verdrehsicherung des Klemmrings in einem aufnehmenden Gehäuseteil, insbesondere Adapterflansch, vorgesehen. Von Vorteil ist dabei, dass das erste Schraubteil beim Transport oder im Lager, also vor Verbinden des Motors beziehungsweise der Motorwelle, als Verdrehsicherung verwendbar ist und beim Verbinden des Motors in den Klemmring einschraubbar ist, so dass die Verdrehsicherung der Welle aufgehoben wird und die Klemmverbindung zwischen Nabe und Welle bewirkt wird.

Bei einer vorteilhaften Ausgestaltung ist die Nabe samt dem Klemmring über die Welle gelagert in einem weiteren Gehäuseteil, insbesondere Motorgehäuseteil. Von Vorteil ist dabei, dass die Welle-Nabe-Verbindung keine Lagerung in einem eigenen Gehäuseteil benötigt sondern mit der Motorwelle über deren Lagerung lagerbar ist.

Bei einer vorteilhaften Ausgestaltung ist der Klemmring mittels eines Verdrehsicherungsmittels derart an der Nabe festgelegt, dass das erste Schraubteil mittig in Umfangsrichtung zwischen zwei benachbarte Abflachungen an die Nabe angedrückt wird. Von Vorteil ist dabei, dass somit eine symmetrische Kraftverteilung bewirkbar ist, da somit die Krafteinwirkung des ersten Schraubteils symmetrisch einbringbar ist zwischen zwei Abflachungen und daher die einwirkende Kraft sowie die zugehörigen Reaktionskräfte symmetrisch verteilt sind.

Bei einer vorteilhaften Ausgestaltung ist der Klemmring auf die Nabe aus axialer Richtung aufgesteckt, so dass die Nabe auf die Welle klemmbar ist,
insbesondere wobei ein axial verlaufender Schlitz in einem Gehäuseteil vorgesehen ist, in welche das erste Schraubteil zumindest teilweise hineinragt als verdrehsichernde Transportsicherung. Von Vorteil ist dabei, dass eine einfache Fertigung ermöglicht ist und gleichzeitig eine Transportsicherung durch das erste Schraubteil im Schlitz ausgeführt ist. Denn der Schlitz erstreckt sich axial. Somit begrenzt das zumindest teilweise aus dem Klemmring herausragende die Drehbewegung in Umfangsrichtung, indem das erste Schraubteil an die Wandung des Schlitzes anschlägt.
Wichtige Merkmale bei dem Adapter sind, dass er mit einer vorgenannten Welle-Nabe-Verbindung ausgeführt ist, wobei die Welle-Nabe-Verbindung von einem Adapterflansch und/oder Adaptergehäuseteil zumindest teilweise umgeben ist,
insbesondere wobei der Adapterplansch einen axial verlaufenden Schlitz aufweist, in welchen sich das erste Schraubteil zumindest teilweise hinein erstreckt zur Bildung einer Transportsicherung und/oder wobei in den Schlitz eine Bohrung mündet, durch welche ein Werkzeug zur Betätigung, insbesondere Schraubens, des ersten Schraubteils hindurchführbar ist.

Von Vorteil ist dabei, dass eine Transportsicherung durch ein Verbindungsmittel, also das erste Schraubteil, bewirkbar ist. Außerdem ist das Motorgehäuse mit dem Adapterflansch und/oder einem weiteren Adaptergehäuseteil verbindbar. Darüber hinaus ist eine radial verlaufende Bohrung im Adaptergehäuseteil vorsehbar, durch welche ein Werkzeug zur Betätigung des ersten Schraubteils hindurchführbar ist und dadurch die Welle-Nabe-Verbindung verbindbar oder lösbar ist. Des Weiteren ist das Getriebegehäuse verbindbar mit dem Adaptergehäuseteil und/oder Adapterflansch. Auf diese Weise sind die Gehäuseteile von Motor Adapter und Getriebe miteinander anhand einer Zentrierung verbindbar. Die im Getriebegehäuse gelagerte Welle ist mittels der auch als Kupplung wirkenden Welle-Nabe-Verbindung verbindbar mit der Motorwelle.

Bei Ausführung des Getriebes als Planetengetriebe ist die mit der Nabe, also Adapterwelle, verbundene Sonnenradverzahnung einerseits über die Planeten lagerbar und andererseits ist die in der Nabe aufgenommene antreibende Motorwelle selbst über Lager im Motor lagerbar.

Wichtige Merkmale bei dem Getriebemotor sind, dass er einen vorgenannten Adapter umfasst. Von Vorteil ist dabei, dass mittels des die Welle-Nabe-Verbindung umfassenden Adapters eine Kupplung bewirkbar ist zwischen Motorwelle und eintreibender Getriebewelle, insbesondere Sonnenradverzahnung aufweisende mit der Nabe verbundene Welle oder Nabe.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Schnittansicht eines erfindungsgemäßen Adapters gezeigt, der mit einem Getriebe verbunden ist.

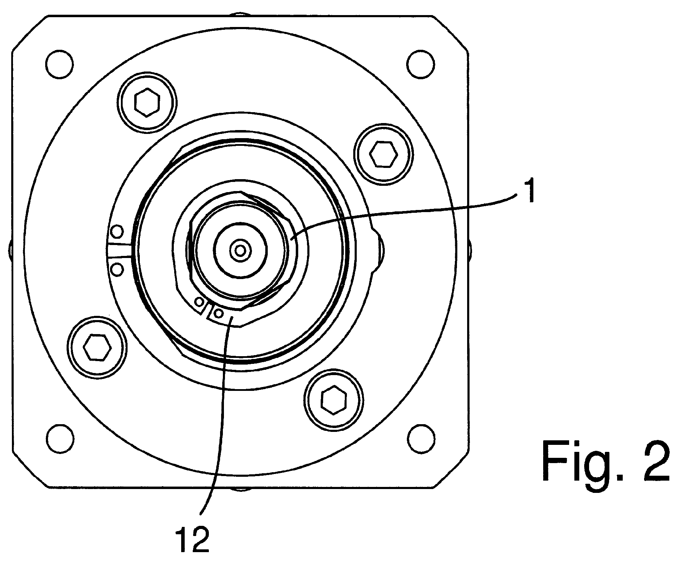

In der Figur 2 ist eine zugehörige Vorderansicht gezeigt.

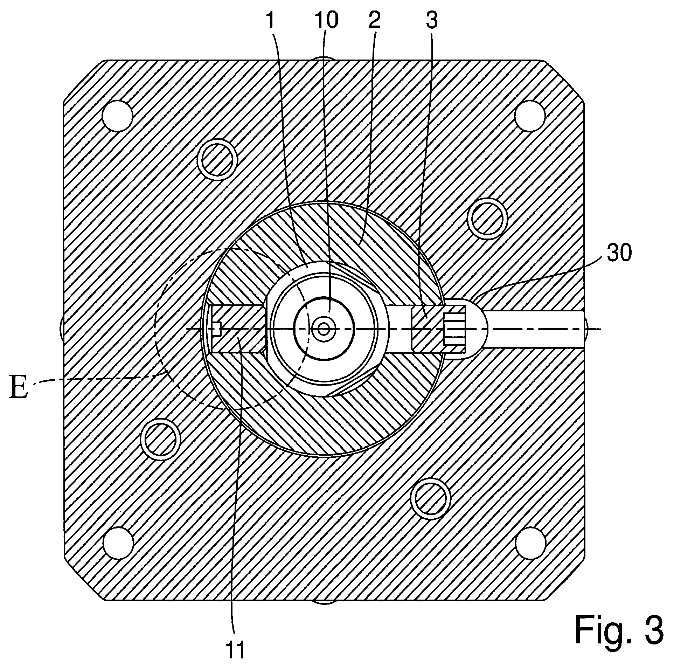

In der Figur 3 ist ein Querschnitt gezeigt.

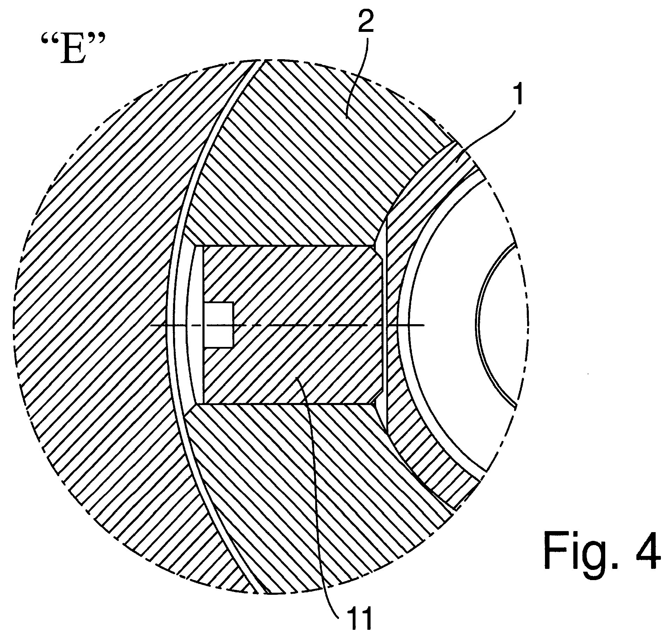

In der Figur 4 ist ein zu Figur 3 gehöriger Ausschnitt vergrößert gezeigt.

In der Figur 5 ist für ein ähnliches Ausführungsbeispiel ein der Figur 1 entsprechender Längsschnitt gezeigt, bei dem allerdings statt des weiteren Gewindestiftes 11 ein Gewindestift mit Gewindeabschnitt 71 in den Klemmring 73 eingeschraubt ist, wobei ein nach radial innen herausragender Zapfenabschnitt 72 am Gewindestift vorgesehen ist, mit dem die Verdrehsicherung und auch die axiale Festlegung an der Adapterwelle ausgeführt ist.

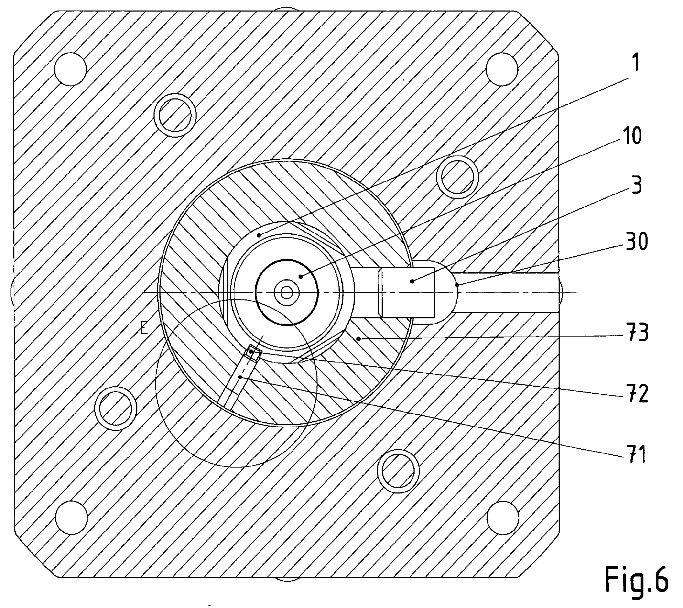

Figur 6 zeigt einen zugehörigen Querschnitt.

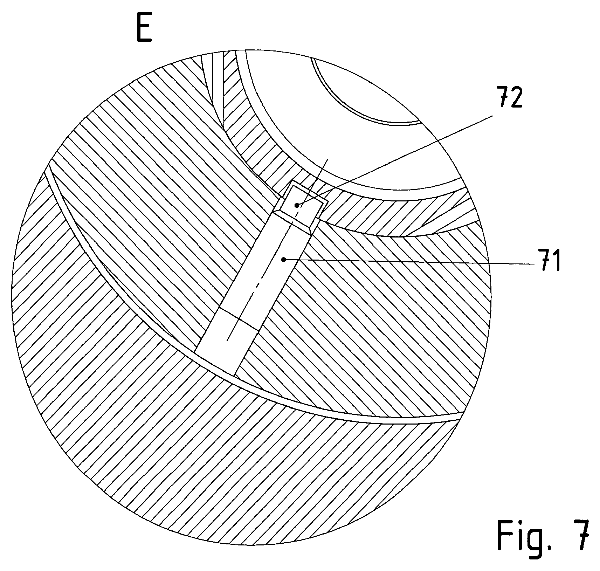

Figur 7 zeigt einen Ausschnitt der Figur 6 vergrößert.

Der Adapter ist zwischen einem eintreibenden, in den Figuren nicht gezeigten Elektromotor und einem abtriebsseitigen Getriebe angeordnet.

Dabei wird das Motorgehäuse mit dem Adapterflansch 4 verbunden und die Rotorwelle des Motors in den Aufnahmebereich 13 der Adapterwelle 1 eingeführt und klemmverbunden.

Der Adapterflansch 4 ist mit dem Adaptergehäuseteil 5 verbunden, welches wiederum mit dem Getriebegehäuseteil 6 verbunden ist. Abtriebsseitig ist das Getriebegehäuseteil 7 mit dem Lagerflansch 8 verbunden, welcher die Lager der Abtriebswelle 9 des Getriebes aufnimmt.

Somit ist die Adapterwelle 1 über die Rotorwelle im Motorgehäuse gelagert. Abtriebsseitig ist eine Sonnenradwelle 10 als eintreibende Welle des Getriebes mit der Adapterwelle 1 steckverbunden. Hierzu wird die Sonnenradwelle mit einem zylindrische und gerändelte und/oder verzahnte Bereich aufweisenden Zapfen in einen entsprechenden Aufnahmebereich der Adapterwelle 1 eingepresst.

Das Adaptergehäuseteil 5 nimmt einen Wellendichtring 6 auf, dessen Dichtlippe gegen die Adapterwelle 1 abdichtet. Somit ist das Schmieröl des Getriebeinneren abgedichtet gegen den Innenraum des Adapters.

Das Getriebe ist als Planetengetriebe ausgeführt, so dass die Sonnenradverzahnung der Sonnenradwelle 10 mit Planetenradverzahnungen im Eingriff steht, die wiederum mit einer Verzahnung eines Hohlrades im Eingriff stehen. Die Planeten sind an dem als Abtriebswelle 9 ausgeführten Planetenradträger gelagert.

Der erste Gewindestift 3 und der weitere Gewindestift 11 sind im selben axialen Bereich angeordnet.

Die Adapterwelle 1 weist in diesem axialen Bereich drei Abflachungen auf, die in Umfangsrichtung voneinander regelmäßig beabstandet sind. Durch die gleichmäßige Beabstandung der drei Abflachungen wird eine gleichmäßige Kraftverteilung erreicht. Die Aufnahme der Rotorwelle des Motors in dem Aufnahmebereich 13 der Adapterwelle erfolgt mittels kraftschlüssiger Verbindung, insbesondere Klemmverbindung.

Hierzu wird der erste Gewindestift 3 durch eine radiale Gewindebohrung des Klemmrings 2 geschraubt, bis er auf die Adapterwelle 1 drückt. Hierbei ist ein derartiger Verdrehwinkel zwischen Adapterwelle 1 und Klemmring 2 vorgesehen, dass der erste Gewindestift 3 auf einen Bereich drückt, welcher in Umfangsrichtung symmetrisch zwischen zwei der Abflachungen der Adapterwelle 1 angeordnet ist. Da die Wandstärke der Adapterwelle 1 in diesem Bereich dicker ist als im Bereich der Abflachungen und somit die Adapterwelle 1 im Bereich der verdünnten Wandstärke, also im Beriech der Abflachungen, elastisch verformt wird, wird dieser dickere Bereich auf die Motorwelle gedrückt. Aufgrund der einwirkenden Druckkraft des ersten Gewindestifts 3 werden die beiden anderen, in Umfangsrichtung zwischen jeweiligen Abflachungen angeordneten ebenfalls dickeren Bereiche mittels der gebildeten Reaktionskräfte ebenfalls auf die Motorwelle gedrückt. Auf diese Weise wird die Motorwelle des Motors zentrisch geklemmt. Denn die am Umfang ausgebildeten drei Kraftdurchleitungsbereiche sind wegen der symmetrischen Anordnung der Abflachungen ebenfalls symmetrisch.

Der Verdrehwinkel zwischen Adapterwelle 1 und Klemmring 2 wird mittels des weiteren Gewindestifts 11 gesichert. Hierzu wird vor der Verbindung der Motorwelle, also Rotorwelle des Motors, der Klemmring 2 auf die Adapterwelle 1 aufgesteckt und der weitere Gewindestift 11 durch eine weitere Gewindebohrung des Klemmrings 2 geschraubt, bis er eine der Abflachungen der Adapterwelle 1 berührt. Auf diese Weise wird der Klemmring 2 gegenüber der Adapterwelle 1 verdrehgesichert. Für diese Verdrehsicherung muss von dem weiteren Gewindestift 11 keine hohe radial wirkende Druckkraft eingeleitet werden, weshalb der der Abflachung zugeordnete mit verdünnter Wandstärke ausgeführte Bereich nicht mit hohen Kräften belastet wird. Der weitere Gewindestift 11 hat nur die Funktion, an der Abflachung der Adapterwelle anzuliegen und somit als Verdrehsicherungsmittel an der Abflachung zu wirken.

Beim Verhinderung von Verwechslungsgefahr weist der erste Gewindestift 3 und der weitere Gewindestift 11 eine unterschiedliche Werkzeugaufnahme für Werkzeuge auf. Beispielsweise weist der erste Gewindestift 3 einen Kreuzschlitzaufnahmebereich auf und der weitere Gewindestift einen Aufnahmebereich für einen Schlitzschraubendreher.

Der Klemmring 2 wird aus axialer Richtung kommend auf die Adapterwelle 1 aufgesteckt und in den Adapterflansch 4 eingesteckt. Dabei ragt der erste Gewindestift 3 aus dem Klemmring 2 nach radial außen heraus. Ein axial verlaufender Schlitz 30, insbesondere Axialnut, im Adapterflansch 4 ist zur Ermöglichung des Einführens im Adapterflansch 4 vorgesehen. Am inneren Endbereich des Schlitzes 30, welcher also in der Innenwandung des Aufnahmebereichs eingearbeitet ist, mündet eine radial verlaufend Bohrung 14, durch welche ein Werkzeug zur Betätigung des ersten Gewindestiftes 3 einführbar ist. Somit ist als Transportsicherung und Lagersicherung mittels des in den Schlitz 30 zumindest teilweise hineinragenden Gewindestiftes 3 eine Verdrehsicherung der Adapterwelle 1 im Adapterflansch 4 ausgeführt. Zur axialen Sicherung des Klemmrings 2 auf der Adapterwelle 1 ist ein Sicherungsring 12 auf der Adapterwelle 1 angeordnet.

Zwischen Adapter und Getriebe ist ein fester spielfreier Einpass vorgesehen. Somit ist also das Motorgehäuse beim Verbinden mit dem Adapterflansch 4 spielfrei festgelegt. Ein Ausrichten der Welle ist nicht notwendig, da beim Verbinden die Motorwelle in den Aufnahmebereich 30 der Adapterwelle 1 eingeschoben wird und dann mittels des Gewindestiftes 3 die Klemmverbindung aktiviert wird. Auf diese Weise ist also eine schnelle und einfache Fertigung erreichbar. In gleicher Weise ist auch ein fester spielfreier Einpass zwischen Adapterflansch 4 und Adaptergehäuseteil 5 vorgesehen. Zwischen Getriebegehäuse und Adaptergehäuseteil 5 ist ebenfalls ein solcher spielfreier Einpass vorgesehen. Somit sind also die Gehäuseteile des Getriebemotors fest und spielfrei verbindbar, ohne dass ein Ausrichten erforderlich ist. Vorteiligerweise entfällt auch ein Ausrichten der Adapterwelle 1 gegenüber der Motorwelle.

Die Adapterwelle 1 ist statisch bestimmt gelagert.

Zur axialen Sicherung, insbesondere zur axialen Lagepositionierung des Klemmrings 2 beim Einschrauben des Gewindestiftes 3, ist am Adapterflansch 4 ein Sicherungsring 15 angeordnet. Zur Anpassung einer zu großen Ausnehmung im Sicherungsring 15 ist axial neben dem Sicherungsring 15 ein Stützscheibe 50 angeordnet. Somit ist während des Einschraubens des Gewindestiftes 3 ein Anlegen des Gewindestiftes 3 an die Stützscheibe 50 ermöglicht. Wenn der Gewindestift schon weitgehend eingeschraubt ist, aber noch nicht auf die Adapterwelle genügend stark drückt, ist die axiale Sicherung zwar nicht mehr durch den Sicherungsring 15 mit Stützscheibe 50 gewährleistet, jedoch ist dann noch die spielbehaftete axiale Sicherung mittels des Sicherungsrings 52 auf der Adapterwelle 1 samt der Wellenschulter 51 der Adapterwelle 1 wirksam.

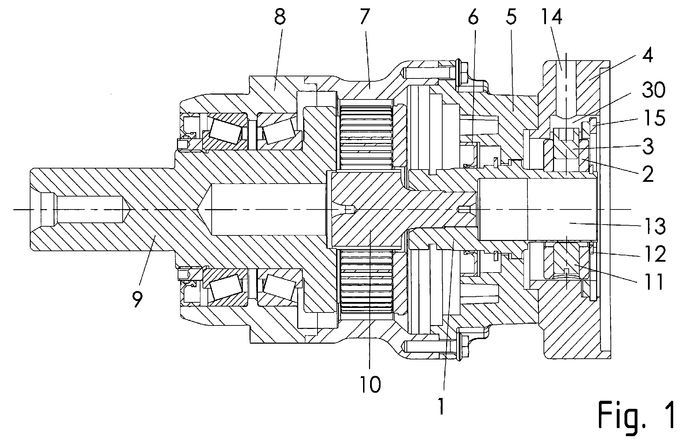

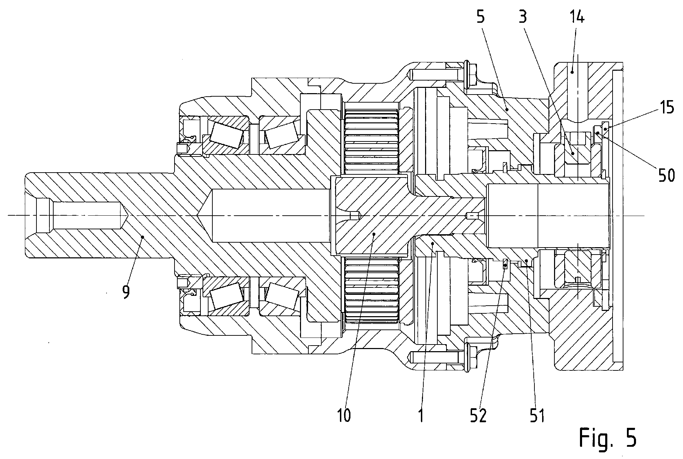

Wie in Figur 5 und Figur 1 gezeigt, ist die axiale Begrenzung und somit auch Sicherung der Adapterwelle 1 erreicht, indem eine Verengung des Adaptergehäuseteils 5 zwischen einem auf der Adapterwelle 1 angeordneten Sicherungsring 52 und einer an der Adapterwelle 1 ausgebildeten Wellenschulter 51 angeordnet ist.

Statt des genannten Planetengetriebes ist auch ein beliebig anderes Getriebe erfindungsgemäß einsetzbar. Daher ist die Erfindung auch ganz allgemein an einer Welle-Nabe-Verbindung ausführbar, wobei die Adapterwelle 1 die Nabe ist und die Motorwelle die zu verbindende Welle.

Bei einem weiteren erfindungsgemäßen Ausführungsbeispiel wird zur Durchmesseranpassung anstatt der genannten Motorwelle, also Rotorwelle, eine Hülse auf die Motorwelle aufgesteckt und die Motorwelle samt Hülse in den Aufnahmebereich 30 der Nabe, insbesondere der Adapterwelle, eingeführt.

Bei einem weiteren erfindungsgemäßen Ausführungsbeispiel sind statt Motor und/oder Getriebe andere Vorrichtungen mit dem Adapter verbunden. Dabei ist die Adapterwelle wiederum gelagert über die eintreibende Welle der eintriebsseitigen, statt des Motors eingesetzten Vorrichtung. Statt der Sonnenradwelle 10 ist somit auch ein anderes Wellenstück mit der Adapterwelle 1 verbindbar und über diese und die eintreibende Welle in der eintreibenden Vorrichtung lagerbar.

Bei einem weiteren erfindungsgemäßen Ausführungsbeispiel wird statt des eine Abflachung berührenden weiteren Gewindestiftes 11 eine andere Art der Verdrehsicherung ausgeführt. Beispielsweise wird der Klemmring 2 mit einer entsprechend der Abflachung der Adapterwelle 1 ausgeführten ebenen Abschnitt der Innenwandung ausgeführt. Somit liegt dann der Klemmring 2 an der Adapterwelle 1 berührend an und der Verdrehwinkel ist ebenfalls gesichert. Der Klemmring 2 ist auch an seiner der Adapterwelle 1 zugewandten Innenwandung polygonal ausgeführt oder zumindest mit regelmäßig voneinander beabstandeten Abflachungen ausgeführt. Somit liegt der Klemmring 2 zumindest im Bereich einer oder mehrerer Abflachungen berührend an und ist zur Adapterwelle verdrehgesichert.

Bei einem weiteren erfindungsgemäßen Ausführungsbeispiel wird statt des eine Abflachung berührenden weiteren Gewindestiftes 11 eine Madenschraube durch eine Gewindebohrung des Klemmrings 2 geschraubt und somit eine Verdrehsicherung geschaffen. Somit wirkt dann die Madenschraube als Verdrehsicherungsmittel.

Zur axialen Sicherung, insbesondere zur axialen Lagepositionierung des Klemmrings 2 beim Einschrauben des Gewindestiftes 3, ist am Adapterflansch 4 ein Sicherungsring 15 angeordnet.

### Bezugszeichenliste

- 1: Adapterwelle
- 2: Klemmring
- 3: Gewindestift
- 4: Adapterflansch
- 5: Adaptergehäuseteil
- 6: Wellendichtring
- 7: Getriebegehäuseteil
- 8: Lagerflansch
- 9: Abtriebswelle
- 10: Sonnenradwelle
- 11: weiterer Gewindestift
- 12: Sicherungsring
- 13: Aufnahmebereich
- 14: Bohrung zur Betätigung des Gewindestifts 3
- 15: Sicherungsring am Adapterflansch 4
- 30: Axialnut
- 50: Stützscheibe
- 51: Wellenschulter
- 52: Sicherungsring auf Adapterwelle 1
- 71: Gewindeabschnitt des Gewindestiftes
- 72: Zapfenabschnitt
- 73: Klemmring

## Patentansprüche

1. Welle-Nabe-Verbindung,
wobei eine Welle, insbesondere Motorwelle, in einen Aufnahmebereich (13) einer Nabe, insbesondere Adapterwelle (1), eingeführt und kraftschlüssig verbunden ist, insbesondere klemmverbunden ist,
**dadurch gekennzeichnet, dass**
die Nabe zumindest in einem axialen Bereich drei, in Umfangsrichtung regelmäßig voneinander beabstandete Abflachungen aufweist,
wobei ein erstes Schraubteil (3)
in einen Klemmring (2, 73) eingeschraubt ist und auf einen Bereich der Nabe drückt zur Bewirkung der kraftschlüssigen Verbindung,
wobei der Bereich in Umfangsrichtung mittig zwischen zwei der Abflachungen angeordnet ist.

2. Welle-Nabe-Verbindung nach Anspruch 1,
**dadurch gekennzeichnet, dass**
die Abflachungen auf der von der Welle abgewandten Außenseite der Nabe angeordnet sind.

3. Welle-Nabe-Verbindung nach mindestens einem der vorangegangenen Ansprüche, **dadurch gekennzeichnet, dass**
der Klemmring (2, 73) mit der Nabe drehfest verbunden ist,
wobei die Abflachungen zwischen dem Klemmring (2, 73) und der Nabe angeordnet sind.

4. Welle-Nabe-Verbindung nach mindestens einem der vorangegangenen Ansprüche, **dadurch gekennzeichnet, dass**
der Bereich einen Umfangswinkelbereich überdeckt, welcher kleiner ist als der Winkelabstand in Umfangsrichtung zwischen zwei in Umfangsrichtung nächst benachbarten Abflachungen.

5. Welle-Nabe-Verbindung nach mindestens einem der vorangegangenen Ansprüche, **dadurch gekennzeichnet, dass**
die Nabe in diesem Bereich eine höhere Wandstärke aufweist als im Bereich einer jeweiligen Abflachung.

6. Welle-Nabe-Verbindung nach mindestens einem der vorangegangenen Ansprüche, **dadurch gekennzeichnet, dass**
als Verdrehsicherungsmittel ein weiteres Schraubteil oder eine mit zumindest einer der Abflachungen der Nabe korrespondierenden Abflachung oder einen mit zumindest einer der Abflachungen der Nabe korrespondierenden ebenen Innenwandungsabschnitt vorgesehen ist am Klemmring (2, 73).

7. Welle-Nabe-Verbindung nach mindestens einem der vorangegangenen Ansprüche, **dadurch gekennzeichnet, dass**
als Verdrehsicherungsmittel der Klemmring (2, 73) an seiner der Nabe zugewandten Innenwandung eine Abflachung aufweist.

8. Welle-Nabe-Verbindung nach mindestens einem der vorangegangenen Ansprüche, **dadurch gekennzeichnet, dass**
die Nabe radial zwischen Welle und Klemmring (2, 73) angeordnet ist.

9. Welle-Nabe-Verbindung nach einem der Ansprüche 6, 7 oder 8,
**dadurch gekennzeichnet, dass**
der Aufnahmebereich (13) zur Betätigung des ersten Schraubteils unterschiedlich ausgeführt ist vom Aufnahmebereich (13) zur Betätigung des Verdrehsicherungsmittels,
so dass zur Betätigung des ersten Schraubteils ein anderes Werkzeug notwendig ist als zur Betätigung des Verdrehsicherungsmittels.

10. Welle-Nabe-Verbindung nach mindestens einem der vorangegangenen Ansprüche, **dadurch gekennzeichnet, dass**
auf der Nabe ein Sicherungsring (12) zur axialen Sicherung des Klemmrings (2, 73) angeordnet ist.

11. Welle-Nabe-Verbindung nach mindestens einem der vorangegangenen Ansprüche, **dadurch gekennzeichnet, dass**
das erste Schraubteil als in Umfangsrichtung wirkende vorgesehen ist.

12. Welle-Nabe-Verbindung nach mindestens einem der vorangegangenen Ansprüche, **dadurch gekennzeichnet, dass**
die Nabe samt dem Klemmring (2, 73) über die Welle gelagert ist in einem weiteren Gehäuseteil
und/oder dass
der Klemmring (2, 73) mittels eines Verdrehsicherungsmittels derart an der Nabe festgelegt ist, dass das erste Schraubteil mittig in Umfangsrichtung zwischen zwei benachbarte Abflachungen an die Nabe angedrückt wird,

13. Welle-Nabe-Verbindung nach mindestens einem der vorangegangenen Ansprüche, **dadurch gekennzeichnet, dass**
der Klemmring (2, 73) auf die Nabe aus axialer Richtung aufgesteckt ist, so dass die Nabe auf die Welle klemmbar ist.

14. Adapter mit einer Welle-Nabe-Verbindung nach mindestens einem der vorangegangenen Ansprüche,
**dadurch gekennzeichnet, dass**
die Welle-Nabe-Verbindung von einem Adapterflansch (4) und/oder Adaptergehäuseteil (5) zumindest teilweise umgeben ist.

15. Getriebemotor mit Adapter nach Anspruch 14.

## Claims

1. A shaft-hub connection,
wherein a shaft, in particular motor shaft, is introduced into a receiving region (13) of a hub, in particular adapter shaft (1), and is connected in non-positive manner, in particular connected by clamping,
**characterised in that**
the hub, at least in an axial region, has three flattened portions, spaced apart regularly from each other in the circumferential direction,
wherein a first screwing part (3) is screwed into a clamping ring (2, 73) and presses on a region of the hub in order to bring about the non-positive connection,
wherein the region in the circumferential direction is arranged centrally between two of the flattened portions.

2. A shaft-hub connection according to Claim 1,
**characterised in that**
the flattened portions are arranged on the outside of the hub which is remote from the shaft.

3. A shaft-hub connection according to at least one of the preceding claims, **characterised in that**
the clamping ring (2, 73) is connected to the hub in rotation-resistant manner,
the flattened portions being arranged between the clamping ring (2, 73) and the hub.

4. A shaft-hub connection according to at least one of the preceding claims, **characterised in that**
the region covers an angle-at-circumference range which is smaller than the angular distance in the circumferential direction between two flattened portions next adjacent in the circumferential direction.

5. A shaft-hub connection according to at least one of the preceding claims, **characterised in that**
the hub in this region has a greater wall thickness than in the region of a respective flattened portion.

6. A shaft-hub connection according to at least one of the preceding claims, **characterised in that**
a further screwing part or a flattened portion which corresponds to at least one of the flattened portions of the hub or a flat inner wall portion corresponding to at least one of the flattened portions of the hub is provided on the clamping ring (2, 73) as anti-twist protection means.

7. A shaft-hub connection according to at least one of the preceding claims, **characterised in that**
the clamping ring (2, 73) has a flattened portion on its inner wall facing the hub as anti-twist protection means.

8. A shaft-hub connection according to at least one of the preceding claims, **characterised in that**
the hub is arranged radially between the shaft and clamping ring (2, 73).

9. A shaft-hub connection according to one of Claims 6, 7 or 8,
**characterised in that**
the receiving region (13) for actuating the first screwing part is embodied differently from the receiving region (13) for actuating the anti-twist protection means,
so that a different tool for actuating the first screwing part is necessary than for actuating the anti-twist protection means.

10. A shaft-hub connection according to at least one of the preceding claims, **characterised in that**
a securing ring (12) for axially securing the clamping ring (2, 73) is arranged on the hub.

11. A shaft-hub connection according to at least one of the preceding claims, **characterised in that**
the first screwing part is provided as acting in the circumferential direction.

12. A shaft-hub connection according to at least one of the preceding claims, **characterised in that**
the hub plus the clamping ring (2, 73) is mounted via the shaft in a further housing part
and/or **in that**
the clamping ring (2, 73) is secured on the hub by means of an anti-twist protection means such that the first screwing part is pressed against the hub centrally in the circumferential direction between two adjacent flattened portions.

13. A shaft-hub connection according to at least one of the preceding claims, **characterised in that**
the clamping ring (2, 73) is placed on the hub from the axial direction, so that the hub can be clamped to the shaft.

14. An adapter with a shaft-hub connection according to at least one of the preceding claims,
**characterised in that**
the shaft-hub connection is at least partially surrounded by an adapter flange (4) and/or adapter housing part (5).

15. A gear motor with an adapter according to Claim 14.

## Revendications

1. Liaison arbre-moyeu
dans laquelle un arbre, notamment un arbre moteur, est inséré dans une zone réceptrice (13) d'un moyeu, en particulier un arbre adaptateur (1), et est relié par engagement positif, notamment relié par serrage,
**caractérisée par le fait que**
le moyeu est muni, au moins dans une région axiale, de trois méplats régulièrement espacés les uns des autres dans la direction périphérique,
une première partie vissable (3) étant vissée dans une bague de serrage (2, 73) et exerçant une pression sur une région dudit moyeu, en vue d'instaurer la liaison par engagement positif,
ladite région occupant, dans la direction périphérique, une position centrale entre deux parmi lesdits méplats.

2. Liaison arbre-moyeu selon la revendication 1,
**caractérisée par le fait que**
les méplats sont situés sur la face extérieure du moyeu, tournée à l'opposé de l'arbre.

3. Liaison arbre-moyeu selon au moins l'une des revendications précédentes, **caractérisée par le fait que**
la bague de serrage (2, 73) est assujettie en rotation au moyeu,
les méplats étant interposés entre ladite bague de serrage (2, 73) et ledit moyeu.

4. Liaison arbre-moyeu selon au moins l'une des revendications précédentes, **caractérisée par le fait que**
la région couvre une plage angulaire périphérique plus petite que la distance angulaire séparant, dans la direction périphérique, deux méplats les plus proches l'un de l'autre dans la direction périphérique.

5. Liaison arbre-moyeu selon au moins l'une des revendications précédentes, **caractérisée par le fait que**
le moyeu présente, dans cette région, une plus grande épaisseur de paroi que dans la région d'un méplat respectif.

6. Liaison arbre-moyeu selon au moins l'une des revendications précédentes, **caractérisée par le fait**
**qu'**une partie vissable supplémentaire ou un méplat concordant avec au moins l'un des méplats du moyeu, voire une zone de paroi intérieure plane concordant avec au moins l'un desdits méplats du moyeu, sur la bague de serrage (2, 73), est prévu(e) en tant que moyen prévenant une torsion.

7. Liaison arbre-moyeu selon au moins l'une des revendications précédentes, **caractérisée par le fait que**
la bague de serrage (2, 73) comporte un méplat sur sa paroi intérieure tournée vers le moyeu, en tant que moyen prévenant une torsion.

8. Liaison arbre-moyeu selon au moins l'une des revendications précédentes, **caractérisée par le fait que**
le moyeu est interposé radialement entre l'arbre et la bague de serrage (2, 73).

9. Liaison arbre-moyeu selon au moins l'une des revendications 6, 7 ou 8, **caractérisée par le fait que**
la zone réceptrice (13) dévolue à l'actionnement de la première partie vissable présente une réalisation différant de celle de la zone réceptrice (13) dévolue à l'actionnement du moyen prévenant une torsion,
de telle sorte que l'actionnement de ladite première partie vissable requière un outil autre que celui affecté à l'actionnement dudit moyen prévenant une torsion.

10. Liaison arbre-moyeu selon au moins l'une des revendications précédentes, **caractérisée par le fait**
**qu'**une bague d'arrêt (12) est implantée sur le moyeu, en vue de l'arrêt axial de la bague de serrage (2, 73).

11. Liaison arbre-moyeu selon au moins l'une des revendications précédentes, **caractérisée par le fait que**
la première partie vissable est prévue pour agir dans la direction périphérique.

12. Liaison arbre-moyeu selon au moins l'une des revendications précédentes, **caractérisée par le fait que**
le moyeu est monté dans une partie de carter supplémentaire, par l'intermédiaire de l'arbre, conjointement à la bague de serrage (2, 73),
et/ou que
ladite bague de serrage (2, 73) est bloquée à demeure sur ledit moyeu, à l'aide d'un moyen prévenant une torsion, de façon telle que la première partie vissable soit pressée contre ledit moyeu dans la direction périphérique, centralement entre deux méplats voisins.

13. Liaison arbre-moyeu selon au moins l'une des revendications précédentes, **caractérisée par le fait que**
la bague de serrage (2, 73) est emboîtée sur le moyeu à partir de la direction axiale, de telle sorte que ledit moyeu puisse être calé rigidement sur l'arbre.

14. Adaptateur pourvu d'une liaison arbre-moyeu conforme à au moins l'une des revendications précédentes,
**caractérisé par le fait que**
la liaison arbre-moyeu est entourée, au moins partiellement, par une bride d'adaptation (4) et/ou par une partie (5) de carter d'adaptation.

15. Moteur de transmission, équipé d'un adaptateur conforme à la revendication 14.
